# EUROPEAN PATENT SPECIFICATION

(11) **EP 3 223 556 B1**
(45) Date of publication and mention of the grant of the patent: **27.02.2019**
(21) Application number: 14907974.1
(22) Date of filing: 12.12.2014
(51) Int. Cl.: H04L 12/24

(54) **BANDWIDTH RESOURCE ALLOCATION METHOD AND TRANSPORT CONTROLLER**
BANDBREITENRESSOURCENZUWEISUNGSVERFAHREN UND TRANSPORTSTEUERGERÄT
PROCÉDÉ D'ATTRIBUTION DE RESSOURCES DE LARGEUR DE BANDE ET DISPOSITIF DE COMMANDE DE TRANSPORT

(43) Date of publication of application: 27.09.2017
(73) Proprietor: Huawei Technologies Co., Ltd., Longgang District Shenzhen, Guangdong 518129 (CN)
(72) Inventor: ZHENG, Haomian, Shenzhen Guangdong 518129 (CN)
(74) Representative: Thun, Clemens
(86) International application number: PCT/CN2014/093724
(87) International publication number: WO 2016/090639

(56) References cited:
- WO-A1-01/17183
- CN-A- 101 513 004
- CN-A- 101 908 999
- CN-A- 102 300 260
- CN-A- 103 782 556
- US-B1- 6 717 939

## Description

### TECHNICAL FIELD

Embodiments of the present invention relate to the field of communications technologies, and in particular, to a bandwidth resource allocation method and a transport network controller.

### BACKGROUND

A virtual transport service (VTS) is an effective manner of providing a virtual service for a transport network user. The virtual transport service relates to two roles: a transport service user that leases a resource, namely, a tenant, and a transport service provider that provides the resource, namely, an operator. Physical resources of a network are virtually divided by an operator. According to requirements of tenants, the physical resources of the network are divided into mutually independent virtual network topologies, and are then provided for different tenants. In this architecture and service mode, resources of different tenants are independent of each other, and the tenants are unaware of existence of each other. Each tenant uses a client controller (CC) to manage a virtual network leased by the tenant from the operator. A transport network controller (TC) is used to allocate resources of the operator, and is responsible for virtually slicing actual physical resources and allocating the resources to different tenants.

In the prior art, resources of different tenants are independent of each other and cannot be shared. When resources that can be allocated by the transport network controller are insufficient, network construction requirements of client controllers cannot be satisfied. Some negotiation involving bandwidth is known from EP3024184 and WO0117183.

### SUMMARY

Embodiments of the present invention provide a bandwidth resource allocation method and a transport network controller to implement resource sharing between different tenants in accordance with the claims.

According to a first aspect, an embodiment of the present invention provides a bandwidth resource allocation method, including:
receiving, by a transport network controller, a first network topology request message from a first client controller, where the first network topology request message includes first node information of a first link, last node information of the first link, and a bandwidth requirement of the first link;
determining, by the transport network controller, whether an allocable bandwidth of the first link satisfies the bandwidth requirement of the first link;
when determining that the allocable bandwidth of the first link does not satisfy the bandwidth requirement of the first link, determining, by the transport network controller, whether any idle bandwidth exists in an allocated bandwidth of the first link, and if yes, determining whether a sum of the allocable bandwidth of the first link and the idle bandwidth in the allocated bandwidth of the first link satisfies the bandwidth requirement of the first link, and if yes, selecting a first idle bandwidth in the allocated bandwidth of the first link as a first negotiated bandwidth, where the first idle bandwidth in the allocated bandwidth of the first link belongs to a second client controller; and
sending, by the transport network controller, a first bandwidth negotiation message to the second client controller, where the first bandwidth negotiation message includes the first node information of the first link, the last node information of the first link, and first negotiated bandwidth information.

In a first possible implementation of the first aspect, the first bandwidth negotiation message further includes one or more of time constraint information or a price reduction policy.

In a second possible implementation of the first aspect, the method further includes: receiving, by the transport network controller, a first bandwidth negotiation accept message from the second client controller, where the first bandwidth negotiation accept message is a message for accepting the first bandwidth negotiation message.

In a third possible implementation of the first aspect, the method further includes: receiving, by the transport network controller, a first bandwidth negotiation reject message from the second client controller, where the first bandwidth negotiation reject message is a message for rejecting the first bandwidth negotiation message.

With reference to the second possible implementation of the first aspect, in a fourth possible implementation of the first aspect, the method further includes: receiving, by the transport network controller, a first negotiated bandwidth release message from the second client controller, where the first negotiated bandwidth release message is a message indicating that the second client controller has released the first negotiated bandwidth.

With reference to the fourth possible implementation of the first aspect, in a fifth possible implementation of the first aspect, the method further includes: adding, by the transport network controller, the first negotiated bandwidth to the allocable bandwidth of the first link to obtain an updated allocable bandwidth of the first link, and determining whether the updated allocable bandwidth of the first link satisfies the bandwidth requirement of the first link, and if the updated allocable bandwidth of the first link satisfies the bandwidth requirement of the first link, allocating, by the transport network controller, a corresponding bandwidth from the updated allocable bandwidth of the first link to the first client controller according to the bandwidth requirement of the first link.

In a sixth possible implementation of the first aspect, when determining that the sum of the allocable bandwidth of the first link and the idle bandwidth in the allocated bandwidth of the first link satisfies the bandwidth requirement of the first link, the method further includes:
selecting a second idle bandwidth in the allocated bandwidth of the first link as a second negotiated bandwidth, where the second idle bandwidth in the allocated bandwidth of the first link belongs to a third client controller; and
sending, by the transport network controller, a second bandwidth negotiation message to the third client controller, where the second bandwidth negotiation message includes the first node information of the first link, the last node information of the first link, and second negotiated bandwidth information.

With reference to the sixth possible implementation of the first aspect, in a seventh possible implementation of the first aspect, the method further includes: receiving, by the transport network controller, a second bandwidth negotiation accept message from the third client controller, where the second bandwidth negotiation accept message is a message for accepting the second bandwidth negotiation message.

With reference to the sixth possible implementation of the first aspect, in an eighth possible implementation of the first aspect, the method further includes: receiving, by the transport network controller, a second bandwidth negotiation reject message from the third client controller, where the second bandwidth negotiation reject message is a message for rejecting the second bandwidth negotiation message.

With reference to the seventh possible implementation of the first aspect, in a ninth possible implementation of the first aspect, the method further includes: receiving, by the transport network controller, a second negotiated bandwidth release message from the third client controller, where the second negotiated bandwidth release message is a message indicating that the third client controller has released the second negotiated bandwidth.

With reference to the ninth possible implementation of the first aspect, in a tenth possible implementation of the first aspect, the method further includes: adding, by the transport network controller, the second negotiated bandwidth to the allocable bandwidth of the first link to obtain an updated allocable bandwidth of the first link, and determining whether the updated allocable bandwidth of the first link satisfies the bandwidth requirement of the first link, and if the updated allocable bandwidth of the first link satisfies the bandwidth requirement of the first link, allocating, by the transport network controller, a corresponding bandwidth from the updated allocable bandwidth of the first link to the first client controller according to the bandwidth requirement of the first link.

In a second aspect a transport network controller is provided being configured and intended to perform any of the above methods.

In the embodiments of the present invention, a transport network controller receives a first network topology request message from a first client controller, where the first network topology request message includes first node information of a first link, last node information of the first link, and a bandwidth requirement of the first link; the transport network controller determines whether an allocable bandwidth of the first link satisfies the bandwidth requirement of the first link; when determining that the allocable bandwidth of the first link does not satisfy the bandwidth requirement of the first link, the transport network controller determines whether any idle bandwidth exists in an allocated bandwidth of the first link, and if yes, determines whether a sum of the allocable bandwidth of the first link and the idle bandwidth in the allocated bandwidth of the first link satisfies the bandwidth requirement of the first link, and if yes, selects a first idle bandwidth in the allocated bandwidth of the first link as a first negotiated bandwidth, where the first idle bandwidth in the allocated bandwidth of the first link belongs to a second client controller; and the transport network controller sends a first bandwidth negotiation message to the second client controller, where the first
bandwidth negotiation message includes the first node information of the first link, the last node information of the first link, and first negotiated bandwidth information. The transport network controller performs resource sharing between different tenants according to the allocable bandwidth of the first link and the idle bandwidth in the allocated bandwidth of the first link.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a flowchart of a bandwidth resource allocation method according to an embodiment of the present invention;
FIG. 2A and FIG. 2B are a flowchart of a bandwidth resource allocation method according to another embodiment of the present invention;
FIG. 3 is a structural diagram of a transport network controller according to the present invention; and
FIG. 4 is a structural diagram of another transport network controller according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

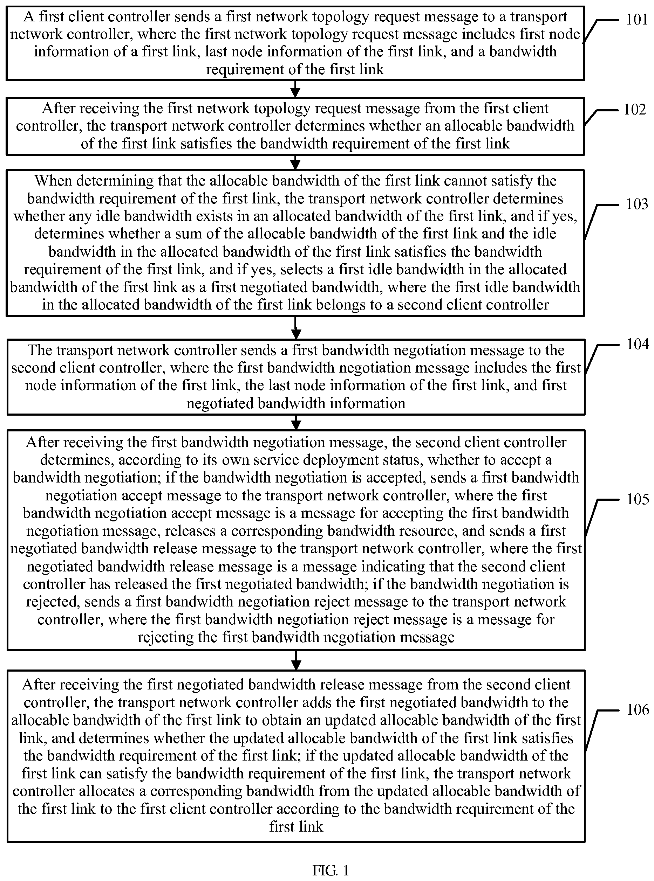

FIG. 1 is a flowchart of a bandwidth resource allocation method according to an embodiment of the present invention.

Step 101: A first client controller sends a first network topology request message to a transport network controller, where the first network topology request message includes first node information of a first link, last node information of the first link, and a bandwidth requirement of the first link.

The first network topology request message is a request for constructing an entire virtual network, and includes nodes, links, and link bandwidths, and may further include time constraint information of the links, for example, as shown in Table 1.

**Table 1**

| | **First node** | **Last node** | **Bandwidth** | **Time constraint** |
|---|---|---|---|---|
| Link 1 | A | B | 10G | From 8:00 a.m. to 8:00 p.m. |
| Link 2 | X | Y | 100G | None |
| ... | | | | |

For ease of understanding, in this embodiment, a link with two nodes is used as an example for description. The first link is requested to be established. The first node of the first link is node A, the last node of the first link is node B, and the bandwidth requirement of the first link is 10G. In this embodiment, a first bandwidth negotiation message may further include time constraint information or the like, for example, a time constraint from 8:00 a.m. to 8:00 p.m., and in other embodiments, may further include other link information, for example, first node information of a second link, last node information of the second link, and a bandwidth requirement of the second link.

Step 102: After receiving the first network topology request message from the first client controller, the transport network controller determines whether an allocable bandwidth of the first link satisfies the bandwidth requirement of the first link.

After receiving the request message, the transport network controller first queries whether the allocable bandwidth of the first link between node A and node B in a local database satisfies a requirement of the first client controller. For example, it is found that the allocable bandwidth of the first link between node A and node B is 50, which does not satisfy a 10G bandwidth requirement of the first client controller.

Step 103: When determining that the allocable bandwidth of the first link does not satisfy the bandwidth requirement of the first link, the transport network controller determines whether any idle bandwidth exists in an allocated bandwidth of the first link, and if yes, determines whether a sum of the allocable bandwidth of the first link and the idle bandwidth in the allocated bandwidth of the first link satisfies the bandwidth requirement of the first link, and if yes, selects a first idle bandwidth in the allocated bandwidth of the first link as a first negotiated bandwidth, where the first idle bandwidth in the allocated bandwidth of the first link belongs to a second client controller.

In this embodiment, the transport network controller queries usage of the allocated bandwidth of the first link, for example, as shown in Table 2. It is determined that an idle bandwidth exists in the allocated bandwidth of the first link. The allocable bandwidth of the first link is 5G, the idle bandwidth in the allocated bandwidth of the first link is 6G, and the sum of the allocable bandwidth of the first link and the idle bandwidth in the allocated bandwidth of the first link is 11G, which satisfies the bandwidth requirement of the first link. The transport network controller selects the first idle bandwidth in the allocated bandwidth of the first link as the first negotiated bandwidth. A 6G idle bandwidth allocated to the second client controller may be selected as the first negotiated bandwidth, or a 5G idle bandwidth allocated to the second client controller may be selected as the first negotiated bandwidth. The selection may be based on a predetermined rule, and is not limited herein. In this embodiment, the 5G idle bandwidth allocated to the second client controller is selected as the first negotiated bandwidth.

In other embodiments, there may be multiple negotiated bandwidths. The multiple negotiated bandwidths belong to different client controllers. A sum of the multiple negotiated bandwidths may be equal to a total negotiation requirement or greater than a total negotiation requirement. This is not limited herein.

**Table 2**

| | **Allocated bandwidth** | **Idle bandwidth** |
|---|---|---|
| Second client controller | 20G | 6G |
| Third client controller | 30G | 0G |
| Fourth client controller | 20G | 0G |

Step 104: The transport network controller sends a first bandwidth negotiation message to the second client controller, where the first bandwidth negotiation message includes the first node information of the first link, the last node information of the first link, and first negotiated bandwidth information.

In this embodiment, the first bandwidth negotiation message may be shown in Table 3. The first node of the first link is node A, the last node of the first link is node B, and the first negotiated bandwidth is 5G. In this embodiment, the first bandwidth negotiation message may further include time constraint information, a price reduction policy, and the like, for example, the time constraint from 8:00 a.m. to 8:00 p.m.

**Table 3**

| | **First node** | **Last node** | **Bandwidth** | **Time constraint** | **Price reduction policy** |
|---|---|---|---|---|---|
| Link 1 | A | B | 5G | From 8:00 a.m. to 8:00 p.m. | Updated SLA information |

Step 105: After receiving the first bandwidth negotiation message, the second client controller determines, according to its own service deployment status, whether to accept bandwidth negotiation. If the bandwidth negotiation is accepted, the second client controller sends a first bandwidth negotiation accept message to the transport network controller, where the first bandwidth negotiation accept message is a message for accepting the first bandwidth negotiation message. In addition, the second client controller releases a corresponding bandwidth resource, and sends a first negotiated bandwidth release message to the transport network controller, where the first negotiated bandwidth release message is a message indicating that the second client controller has released the first negotiated bandwidth. If the bandwidth negotiation is rejected, the second client controller sends a first bandwidth negotiation reject message to the transport network controller, where the first bandwidth negotiation reject message is a message for rejecting the first bandwidth negotiation message.

Step 106: After receiving the first negotiated bandwidth release message from the second client controller, the transport network controller adds the first negotiated bandwidth to the allocable bandwidth of the first link to obtain an updated allocable bandwidth of the first link, and determines whether the updated allocable bandwidth of the first link satisfies the bandwidth requirement of the first link. If the updated allocable bandwidth of the first link satisfies the bandwidth requirement of the first link, the transport network controller allocates a corresponding bandwidth from the updated allocable bandwidth of the first link to the first client controller according to the bandwidth requirement of the first link.

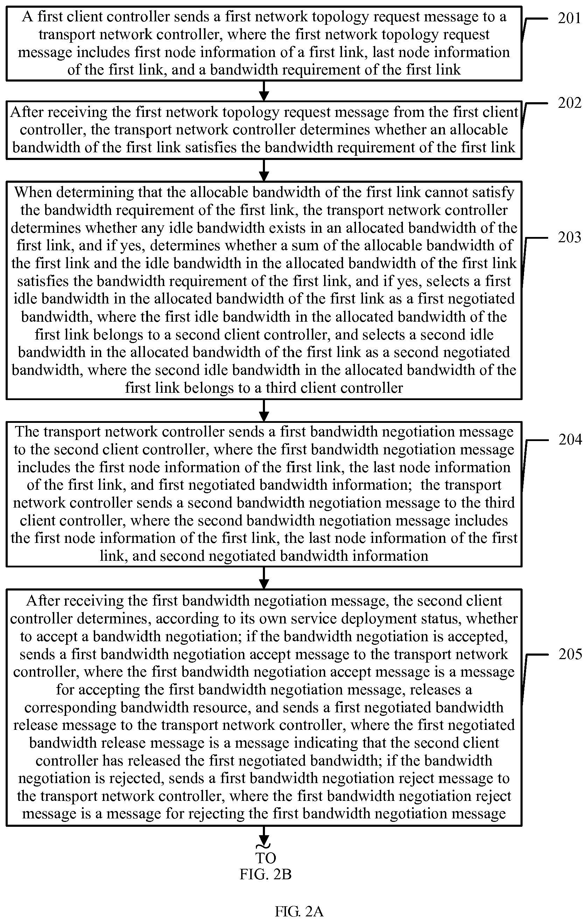

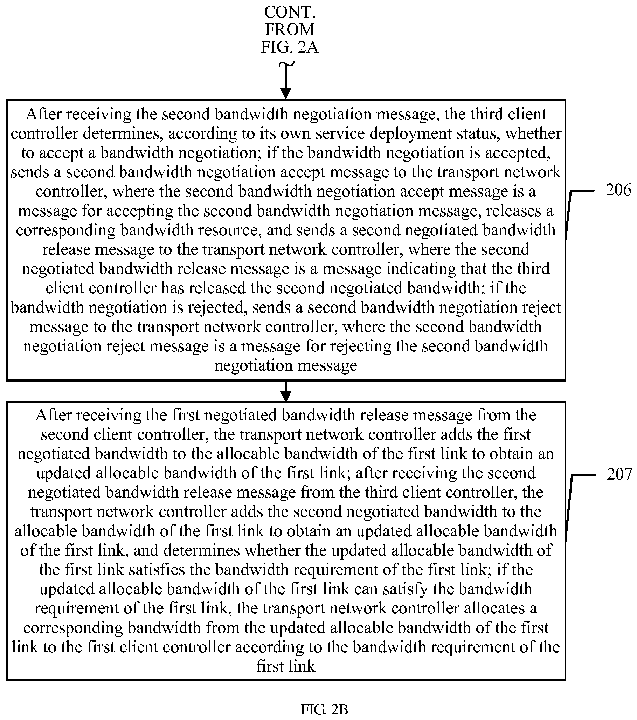

FIG. 2A and FIG. 2B are a flowchart of a bandwidth resource allocation method according to another embodiment of the present invention.

Step 201: A first client controller sends a first network topology request message to a transport network controller, where the first network topology request message includes first node information of a first link, last node information of the first link, and a bandwidth requirement of the first link.

The first network topology request message is a request for constructing an entire virtual network, and includes nodes, links, and link bandwidths, and may further include time constraint information of the links, for example, as shown in Table 4.

**Table 4**

| | **First node** | **Last node** | **Bandwidth** | **Time constraint** |
|---|---|---|---|---|
| Link 1 | X | Y | 100G | None |
| Link 2 | C | D | 10G | None |
| ... | | | | |

For ease of understanding, in this embodiment, a link with two nodes is used as an example for description. The first link is requested to be established. The first node of the first link is node X, the last node of the first link is node Y, and the bandwidth requirement of the first link is 100G.

Step 202: After receiving the first network topology request message from the first client controller, the transport network controller determines whether an allocable bandwidth of the first link satisfies the bandwidth requirement of the first link.

After receiving the request message, the transport network controller first queries whether the allocable bandwidth of the first link between node X and node Y in a local database satisfies a requirement of the first client controller. For example, it is found that the allocable bandwidth of the first link between node X and node Y is 80G, which does not satisfy a 100G bandwidth requirement of the first client controller.

Step 203: When determining that the allocable bandwidth of the first link does not satisfy the bandwidth requirement of the first link, the transport network controller determines whether any idle bandwidth exists in an allocated bandwidth of the first link, and if yes, determines whether a sum of the allocable bandwidth of the first link and the idle bandwidth in the allocated bandwidth of the first link satisfies the bandwidth requirement of the first link, and if yes, selects a first idle bandwidth in the allocated bandwidth of the first link as a first negotiated bandwidth, where the first idle bandwidth in the allocated bandwidth of the first link belongs to a second client controller, and selects a second idle bandwidth in the allocated bandwidth of the first link as a second negotiated bandwidth, where the second idle bandwidth in the allocated bandwidth of the first link belongs to a third client controller.

In this embodiment, the transport network controller queries usage of the allocated bandwidth of the first link, for example, as shown in Table 5. It is determined that an idle bandwidth exists in the allocated bandwidth of the first link. The allocable bandwidth of the first link is 80G, the idle bandwidth in the allocated bandwidth of the first link is 20G, and the sum of the allocable bandwidth of the first link and the idle bandwidth in the allocated bandwidth of the first link is 100G, which satisfies the bandwidth requirement of the first link. The transport network controller selects the first idle bandwidth in the allocated bandwidth of the first link as the first negotiated bandwidth. In this embodiment, a 15G idle bandwidth allocated to the second client controller is selected as the first negotiated bandwidth, and a 5G idle bandwidth allocated to the third client controller is selected as the second negotiated bandwidth.

**Table 5**

| | **Allocated bandwidth** | **Idle bandwidth** |
|---|---|---|
| Second client controller | 20G | 15G |
| Third client controller | 30G | 5G |
| Fourth client controller | 20G | 0G |

In other embodiments, usage of the allocated bandwidth of the first link may also be shown in Table 6. It is determined that an idle bandwidth exists in the allocated bandwidth of the first link. The allocable bandwidth of the first link is 800, the idle bandwidth in the allocated bandwidth of the first link is 25G, and the sum of the allocable bandwidth of the first link and the idle bandwidth in the allocated bandwidth of the first link is 105G, which satisfies the bandwidth requirement of the first link. The first idle bandwidth in the allocated bandwidth of the first link is selected as the first negotiated bandwidth. Multiple methods may be available for selecting an idle bandwidth. For example, 15G of the second client controller and 5G of the third client controller are selected, or 15G of the second client controller and 5G of the fourth client controller are selected, or 10G of the second client controller, 5G of the third client controller, and 5G of the fourth client controller are selected, or 12G of the second client controller, 5G of the third client controller, and 3G of the fourth client controller are selected.

**Table 6**

| | **Allocated bandwidth** | **Idle bandwidth** |
|---|---|---|
| Second client controller | 20G | 15G |
| Third client controller | 30G | 5G |
| Fourth client controller | 20G | 5G |

Step 204: The transport network controller sends a first bandwidth negotiation message to the second client controller, where the first bandwidth negotiation message includes the first node information of the first link, the last node information of the first link, and first negotiated bandwidth information. The transport network controller sends a second bandwidth negotiation message to the third client controller, where the second bandwidth negotiation message includes the first node information of the first link, the last node information of the first link, and second negotiated bandwidth information. A sequence of sending the first bandwidth negotiation message and the second bandwidth negotiation message is not limited.

In this embodiment, the first bandwidth negotiation message may be shown in Table 6. The first node of the first link is node X, the last node of the first link is node Y, and the first negotiated bandwidth is 15G. Further, updated SLA information or the like may be included.

**Table 6**

| | **First node** | **Last node** | **Bandwidth** | **Price reduction policy** |
|---|---|---|---|---|
| Link 1 | X | Y | 15G | Updated SLA information |

In this embodiment, the second bandwidth negotiation message may be shown in Table 7. The first node of the first link is node X, the last node of the first link is node Y, and the second negotiated bandwidth is 5G. Further, updated SLA information or the like may be included.

**Table 7**

| | **First node** | **Last node** | **Bandwidth** | **Price reduction policy** |
|---|---|---|---|---|
| Link 1 | X | Y | 5G | Updated SLA information |

Step 205: After receiving the first bandwidth negotiation message, the second client controller determines, according to its own service deployment status, whether to accept bandwidth negotiation. If the bandwidth negotiation is accepted, the second client controller sends a first bandwidth negotiation accept message to the transport network controller, where the first bandwidth negotiation accept message is a message for accepting the first bandwidth negotiation message. In addition, the second client controller releases a corresponding bandwidth resource, and sends a first negotiated bandwidth release message to the transport network controller, where the first negotiated bandwidth release message is a message indicating that the second client controller has released the first negotiated bandwidth. If the bandwidth negotiation is rejected, the second client controller sends a first bandwidth negotiation reject message to the transport network controller, where the first bandwidth negotiation reject message is a message for rejecting the first bandwidth negotiation message.

Step 206: After receiving the second bandwidth negotiation message, the third client controller determines, according to its own service deployment status, whether to accept bandwidth negotiation. If the bandwidth negotiation is accepted, the third client controller sends a second bandwidth negotiation accept message to the transport network controller, where the second bandwidth negotiation accept message is a message for accepting the second bandwidth negotiation message. In addition, the third client controller releases a corresponding bandwidth resource, and sends a second negotiated bandwidth release message to the transport network controller, where the second negotiated bandwidth release message is a message indicating that the third client controller has released the second negotiated bandwidth. If the bandwidth negotiation is rejected, the third client controller sends a second bandwidth negotiation reject message to the transport network controller, where the second bandwidth negotiation reject message is a message for rejecting the second bandwidth negotiation message.

Herein, a sequence of performing an action by the second client controller after the first bandwidth negotiation message is received and performing an action by the third client controller after the second bandwidth negotiation message is received is not limited.

Step 207: After receiving the first negotiated bandwidth release message from the second client controller, the transport network controller adds the first negotiated bandwidth to the allocable bandwidth of the first link to obtain an updated allocable bandwidth of the first link. After receiving the second negotiated bandwidth release message from the third client controller, the transport network controller adds the second negotiated bandwidth to the allocable bandwidth of the first link to obtain an updated allocable bandwidth of the first link, and determines whether the updated allocable bandwidth of the first link satisfies the bandwidth requirement of the first link. If the updated allocable bandwidth of the first link satisfies the bandwidth requirement of the first link, the transport network controller allocates a corresponding bandwidth from the updated allocable bandwidth of the first link to the first client controller according to the bandwidth requirement of the first link.

In this embodiment, after receiving the first negotiated bandwidth release message from the second client controller, the transport network controller adds the 15G first negotiated bandwidth to the 80G allocable bandwidth to obtain an updated 95G allocable bandwidth of the first link. In this case, the updated allocable bandwidth of the first link still does not satisfy the bandwidth requirement of the first link. After receiving the second negotiated bandwidth release message from the third client controller, the transport network controller adds the 5G first negotiated bandwidth to the 95G allocable bandwidth to obtain an updated 100G allocable bandwidth of the first link. In this case, the updated allocable bandwidth of the first link still does not satisfy the bandwidth requirement of the first link. In this case, the transport network controller allocates a corresponding bandwidth from the updated allocable bandwidth of the first link to the first client controller according to the bandwidth requirement of the first link. In other embodiments, the second negotiated bandwidth release message from the third client controller may also be received first, and then the first negotiated bandwidth release message from the second client controller is received. This is not limited herein.

In this embodiment, if all bandwidth negotiations are already completed, but the updated allocable bandwidth of the first link still does not satisfy the bandwidth requirement of the first link, a failure message is sent to the first client controller. For example, in this embodiment, the third client controller rejects the bandwidth negotiation, and the transport network controller receives a second bandwidth negotiation reject message from the third client controller.

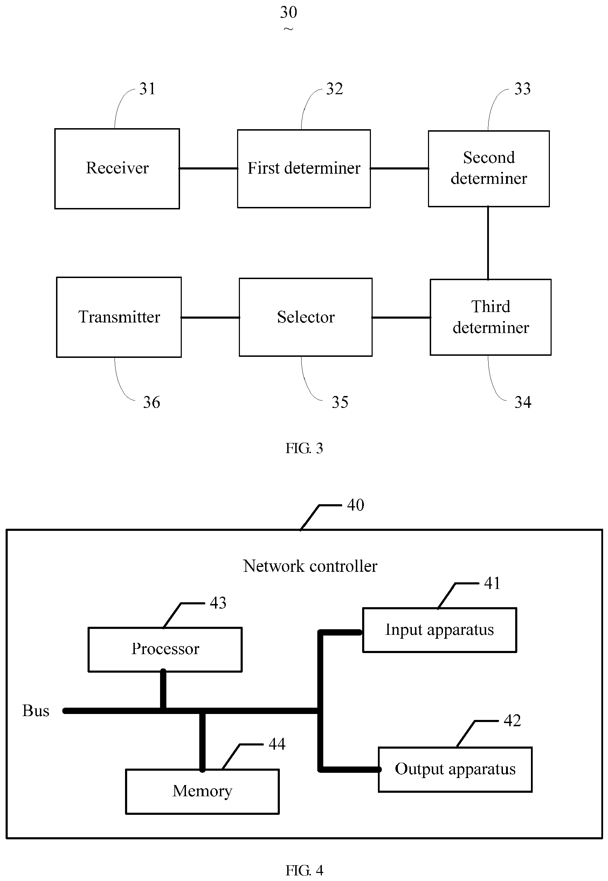

FIG. 3 is a structural diagram of a transport network controller 30 according to the present invention. The transport network controller 30 includes:
a receiver 31, configured to receive a first network topology request message from a first client controller, where the first network topology request message includes first node information of a first link, last node information of the first link, and a bandwidth requirement of the first link;
a first determiner 32, configured to determine whether an allocable bandwidth of the first link satisfies the bandwidth requirement of the first link;
a second determiner 33, configured to determine, when the first determiner determines that the allocable bandwidth of the first link does not satisfy the bandwidth requirement of the first link, whether any idle bandwidth exists in an allocated bandwidth of the first link;
a third determiner 34, configured to determine, when the second determiner determines that an idle bandwidth exists in the allocated bandwidth of the first link, whether a sum of the allocable bandwidth of the first link and the idle bandwidth in the allocated bandwidth of the first link satisfies the bandwidth requirement of the first link;
a selector 35, configured to select a first idle bandwidth in the allocated bandwidth of the first link as a first negotiated bandwidth when the third determiner determines that the sum of the allocable bandwidth of the first link and the idle bandwidth in the allocated bandwidth of the first link satisfies the bandwidth requirement of the first link, where the first idle bandwidth in the allocated bandwidth of the first link belongs to a second client controller; and
a transmitter 36, configured to send a first bandwidth negotiation message to the second client controller, where the first bandwidth negotiation message includes the first node information of the first link, the last node information of the first link, and first negotiated bandwidth information.

The first bandwidth negotiation message sent by the transmitter further includes one or more of time constraint information or a price reduction policy.

The receiver is further configured to receive a first bandwidth negotiation accept message from the second client controller, where the first bandwidth negotiation accept message is a message for accepting the first bandwidth negotiation message.

The receiver is further configured to receive a first bandwidth negotiation reject message from the second client controller, where the first bandwidth negotiation reject message is a message for rejecting the first bandwidth negotiation message.

The receiver is further configured to receive a first negotiated bandwidth release message from the second client controller, where the first negotiated bandwidth release message is a message indicating that the second client controller has released the first negotiated bandwidth.

The transport network controller may further include: an allocator, configured to add the first negotiated bandwidth to the allocable bandwidth of the first link to obtain an updated allocable bandwidth of the first link, and determine whether the updated allocable bandwidth of the first link satisfies the bandwidth requirement of the first link, and if the updated allocable bandwidth of the first link satisfies the bandwidth requirement of the first link, allocate a corresponding bandwidth from the updated allocable bandwidth of the first link to the first client controller according to the bandwidth requirement of the first link.

Further, when the third determiner determines that the sum of the allocable bandwidth of the first link and the idle bandwidth in the allocated bandwidth of the first link satisfies the bandwidth requirement of the first link,
the selector may be further configured to select a second idle bandwidth in the allocated bandwidth of the first link as a second negotiated bandwidth, where the second idle bandwidth in the allocated bandwidth of the first link belongs to a third client controller; and
the transmitter may be further configured to send a second bandwidth negotiation message to the third client controller, where the second bandwidth negotiation message includes the first node information of the first link, the last node information of the first link, and second negotiated bandwidth information.

The receiver is further configured to receive a second bandwidth negotiation accept message from the third client controller, where the second bandwidth negotiation accept message is a message for accepting the second bandwidth negotiation message.

The receiver is further configured to receive a second bandwidth negotiation reject message from the third client controller, where the second bandwidth negotiation reject message is a message for rejecting the second bandwidth negotiation message.

The receiver is further configured to receive a second negotiated bandwidth release message from the third client controller, where the second negotiated bandwidth release message is a message indicating that the third client controller has released the second negotiated bandwidth.

The allocator is further configured to add the second negotiated bandwidth to the allocable bandwidth of the first link to obtain an updated allocable bandwidth of the first link, and determine whether the updated allocable bandwidth of the first link satisfies the bandwidth requirement of the first link, and if the updated allocable bandwidth of the first link satisfies the bandwidth requirement of the first link, allocate a corresponding bandwidth from the updated allocable bandwidth of the first link to the first client controller according to the bandwidth requirement of the first link.

FIG. 4 is a structural diagram of another transport network controller 40 according to the present invention. The transport network controller 40 includes:
an input apparatus 41, an output apparatus 42, and a processor 43 (a quantity of processors in the transport network controller 40 may be one or more, and one processor 43 is used as an example in FIG. 4). The transport network controller may further include a memory 44. In some embodiments of the present invention, the input apparatus 41, the output apparatus 42, the processor 43, and the memory 44 may be connected by a bus or in other manners, and a connection by a bus is used as an example in FIG. 4.

The input apparatus 41 is configured to receive, according to an operation of the processor 43, information sent by a client controller.

The output apparatus 42 is configured to send information to the client controller according to the operation of the processor 43.

By invoking an operation instruction stored in the memory 44, the processor 43 is configured to execute the following operations:
receiving a first network topology request message from a first client controller, where the first network topology request message includes first node information of a first link, last node information of the first link, and a bandwidth requirement of the first link;
determining whether an allocable bandwidth of the first link satisfies the bandwidth requirement of the first link;
when determining that the allocable bandwidth of the first link does not satisfy the bandwidth requirement of the first link, determining whether any idle bandwidth exists in an allocated bandwidth of the first link, and if yes, determining whether a sum of the allocable bandwidth of the first link and the idle bandwidth in the allocated bandwidth of the first link satisfies the bandwidth requirement of the first link, and if yes, selecting a first idle bandwidth in the allocated bandwidth of the first link as a first negotiated bandwidth, where the first idle bandwidth in the allocated bandwidth of the first link belongs to a second client controller; and
sending a first bandwidth negotiation message to the second client controller, where the first bandwidth negotiation message includes the first node information of the first link, the last node information of the first link, and first negotiated bandwidth information.

The first bandwidth negotiation message further includes one or more of time constraint information or a price reduction policy.

The processor 43 is further configured to receive a first bandwidth negotiation accept message from the second client controller, where the first bandwidth negotiation accept message is a message for accepting the first bandwidth negotiation message.

The processor 43 is further configured to receive a first bandwidth negotiation reject message from the second client controller, where the first bandwidth negotiation reject message is a message for rejecting the first bandwidth negotiation message.

The processor 43 is further configured to receive a first negotiated bandwidth release message from the second client controller, where the first negotiated bandwidth release message is a message indicating that the second client controller has released the first negotiated bandwidth.

The processor 43 is further configured to add the first negotiated bandwidth to the allocable bandwidth of the first link to obtain an updated allocable bandwidth of the first link, determining whether the updated allocable bandwidth of the first link satisfies the bandwidth requirement of the first link, and if the updated allocable bandwidth of the first link satisfies the bandwidth requirement of the first link, allocating a corresponding bandwidth from the updated allocable bandwidth of the first link to the first client controller according to the bandwidth requirement of the first link.

The processor 43 is further configured to control, when determining that the sum of the allocable bandwidth of the first link and the idle bandwidth in the allocated bandwidth of the first link satisfies the bandwidth requirement of the first link,
selecting a second idle bandwidth in the allocated bandwidth of the first link as a second negotiated bandwidth, where the second idle bandwidth in the allocated bandwidth of the first link belongs to a third client controller; and
sending a second bandwidth negotiation message to the third client controller, where the second bandwidth negotiation message includes the first node information of the first link, the last node information of the first link, and second negotiated bandwidth information.

The processor 43 is further configured to receive a second bandwidth negotiation accept message from the third client controller, where the second bandwidth negotiation accept message is a message for accepting the second bandwidth negotiation message.

The processor 43 is further configured to receive a second bandwidth negotiation reject message from the third client controller, where the second bandwidth negotiation reject message is a message for rejecting the second bandwidth negotiation message.

The processor 43 is further configured to receive a second negotiated bandwidth release message from the third client controller, where the second negotiated bandwidth release message is a message indicating that the third client controller has released the second negotiated bandwidth.

The processor 43 is further configured to add the second negotiated bandwidth to the allocable bandwidth of the first link to obtain an updated allocable bandwidth of the first link, determining whether the updated allocable bandwidth of the first link satisfies the bandwidth requirement of the first link, and if the updated allocable bandwidth of the first link satisfies the bandwidth requirement of the first link, allocating a corresponding bandwidth from the updated allocable bandwidth of the first link to the first client controller according to the bandwidth requirement of the first link.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

## Claims

1. A bandwidth resource allocation method, comprising:
• receiving, by a transport network controller, a first network topology request message from a first client controller, wherein the first network topology request message comprises first node information of a first link, last node information of the first link, and a bandwidth requirement of the first link (step 101);
• determining, by the transport network controller, whether an allocable bandwidth of the first link satisfies the bandwidth requirement of the first link (step 102);
• when determining that the allocable bandwidth of the first link does not satisfy the bandwidth requirement of the first link, determining, by the transport network controller, whether any idle bandwidth exists in an allocated bandwidth of the first link, and if yes, determining whether a sum of the allocable bandwidth of the first link and the idle bandwidth in the allocated bandwidth of the first link satisfies the bandwidth requirement of the first link, and if yes, selecting a first idle bandwidth in the allocated bandwidth of the first link as a first negotiated bandwidth, wherein the first idle bandwidth in the allocated bandwidth of the first link belongs to a second client controller (step 103); and
• sending, by the transport network controller, a first bandwidth negotiation message to the second client controller, wherein the first bandwidth negotiation message comprises the first node information of the first link, the last node information of the first link, and first negotiated bandwidth information (step 104).

2. The method according to claim 1, further comprising:
receiving, by the transport network controller, a first bandwidth negotiation accept message from the second client controller, wherein the first bandwidth negotiation accept message is a message for accepting the first bandwidth negotiation message;
receiving, by the transport network controller, a first negotiated bandwidth release message from the second client controller, wherein the first negotiated bandwidth release message is a message indicating that the second client controller has released the first negotiated bandwidth.

3. The method according to claim 1, further comprising:
receiving, by the transport network controller, a first bandwidth negotiation reject message from the second client controller, wherein the first bandwidth negotiation reject message is a message for rejecting the first bandwidth negotiation message.

4. The method according to claim 2, further comprising:
adding, by the transport network controller, the first negotiated bandwidth to the allocable bandwidth of the first link to obtain an updated allocable bandwidth of the first link, and determining whether the updated allocable bandwidth of the first link satisfies the bandwidth requirement of the first link, and if the updated allocable bandwidth of the first link satisfies the bandwidth requirement of the first link, allocating, by the transport network controller, a corresponding bandwidth from the updated allocable bandwidth of the first link to the first client controller according to the bandwidth requirement of the first link.

5. The method according to claim 1, wherein when determining that the sum of the allocable bandwidth of the first link and the idle bandwidth in the allocated bandwidth of the first link satisfies the bandwidth requirement of the first link, the method further comprises:
Selecting a second idle bandwidth in the allocated bandwidth of the first link as a second negotiated bandwidth, wherein the second idle bandwidth in the allocated bandwidth of the first link belongs to a third client controller; and
sending, by the transport network controller, a second bandwidth negotiation message to the third client controller, wherein the second bandwidth negotiation message comprises the first node information of the first link, the last node information of the first link, and second negotiated bandwidth information.

6. The method according to claim 5, further comprising:
receiving, by the transport network controller, a second bandwidth negotiation accept message from the third client controller, wherein the second bandwidth negotiation accept message is a message for accepting the second bandwidth negotiation message;
receiving, by the transport network controller, a second negotiated bandwidth release message from the third client controller, wherein the second negotiated bandwidth release message is a message indicating that the third client controller has released the second negotiated bandwidth.

7. The method according to claim 5, further comprising:
receiving, by the transport network controller, a second bandwidth negotiation reject message from the third client controller, wherein the second bandwidth negotiation reject message is a message for rejecting the second bandwidth negotiation message.

8. The method according to claim 6, further comprising:
adding, by the transport network controller, the second negotiated bandwidth to the allocable bandwidth of the first link to obtain an updated allocable bandwidth of the first link, and determining whether the updated allocable bandwidth of the first link satisfies the bandwidth requirement of the first link, and if the updated allocable bandwidth of the first link satisfies the bandwidth requirement of the first link, allocating, by the transport network controller, a corresponding bandwidth from the updated allocable bandwidth of the first link to the first client controller according to the bandwidth requirement of the first link.

9. A transport network controller (30) configured and intended to perform any of the methods according to claims 1-8.

## Patentansprüche

1. Bandbreiten-Ressourcenzuteilungsverfahren, das Folgendes umfasst:
• Empfangen, durch einen Transportnetzwerk-Controller, einer ersten Netzwerktopologie-Anfragenachricht von einem ersten Client-Controller, wobei die erste Netzwerktopologie-Anfragenachricht erste Knoteninformationen eines ersten Links, letzte Knoteninformationen des ersten Links und eine Bandbreitenanforderung des ersten Links umfasst (Schritt 101);
• Bestimmen, durch den Transportnetzwerk-Controller, ob eine zuteilbare Bandbreite des ersten Links die Bandbreitenanforderung des ersten Links erfüllt (Schritt 102);
• wenn bestimmt wird, dass die zuteilbare Bandbreite des ersten Links die Bandbreitenanforderung des ersten Links nicht erfüllt, Bestimmen, durch den Transportnetzwerk-Controller, ob eine ungenutzte Bandbreite in einer zugeteilten Bandbreite des ersten Links existiert, und wenn Ja, Bestimmen, ob eine Summe der zuteilbaren Bandbreite des ersten Links und der ungenutzten Bandbreite in der zugeteilten Bandbreite des ersten Links die Bandbreitenanforderung des ersten Links erfüllt, und wenn Ja, Auswählen einer ersten ungenutzten Bandbreite in der zugeteilten Bandbreite des ersten Links als eine erste verhandelte Bandbreite, wobei die erste ungenutzte Bandbreite in der zugeteilten Bandbreite des ersten Links einem zweiten Client-Controller angehört (Schritt 103); und
• Senden, durch den Transportnetzwerk-Controller, einer ersten Bandbreiten-Verhandlungsnachricht an den zweiten Client-Controller, wobei die erste Bandbreiten-Verhandlungsnachricht die ersten Knoteninformationen des ersten Links, die letzten Knoteninformationen des ersten Links und die ersten verhandelten Bandbreiteninformationen umfasst (Schritt 104).

2. Verfahren gemäß Anspruch 1, das ferner Folgendes umfasst:
Empfangen, durch den Transportnetzwerk-Controller, einer ersten Bandbreitenverhandlungs-Annahmenachricht von dem zweiten Client-Controller, wobei die erste Bandbreitenverhandlungs-Annahmenachricht eine Nachricht zum Akzeptieren der ersten Bandbreiten-Verhandlungsnachricht ist;
Empfangen, durch den Transportnetzwerk-Controller, einer ersten verhandelten Bandbreiten-Freigabenachricht von dem zweiten Client-Controller, wobei die erste verhandelte Bandbreiten-Freigabenachricht eine Nachricht ist, die angibt, dass der zweite Client-Controller die erste verhandelte Bandbreite freigegeben hat.

3. Verfahren gemäß Anspruch 1, das ferner Folgendes umfasst:
Empfangen, durch den Transportnetzwerk-Controller, einer ersten Bandbreitenverhandlungs-Ablehnungsnachricht von dem zweiten Client-Controller, wobei die erste Bandbreitenverhandlungs-Ablehnungsnachricht eine Nachricht zum Ablehnen der ersten Bandbreiten-Verhandlungsnachricht ist.

4. Verfahren gemäß Anspruch 2, das ferner Folgendes umfasst:
Hinzufügen, durch den Transportnetzwerk-Controller, der ersten verhandelten Bandbreite zu der zuteilbaren Bandbreite des ersten Links, um eine aktualisierte zuteilbare Bandbreite des ersten Links zu erhalten und zu bestimmen, ob die aktualisierte zuteilbare Bandbreite des ersten Links die Bandbreitenanforderung des ersten Links erfüllt, und wenn die aktualisierte zuteilbare Bandbreite des ersten Links die Bandbreitenanforderung des ersten Links erfüllt, Zuteilen, durch den Transportnetzwerk-Controller, einer entsprechenden Bandbreite von der aktualisierten zuteilbaren Bandbreite des ersten Links zu dem ersten Client-Controller gemäß der Bandbreitenanforderung des ersten Links.

5. Verfahren gemäß Anspruch 1, wobei, wenn bestimmt wird, dass die Summe der zuteilbaren Bandbreite des ersten Links und der ungenutzten Bandbreite in der zugeteilten Bandbreite des ersten Links die Bandbreitenanforderung des ersten Links erfüllt, das Verfahren ferner Folgendes umfasst:
Auswählen einer zweiten ungenutzten Bandbreite in der zugeteilten Bandbreite des ersten Links als eine zweite verhandelte Bandbreite, wobei die zweite ungenutzte Bandbreite in der zugeteilten Bandbreite des ersten Links einem dritten Client-Controller angehört; und
Senden, durch den Transportnetzwerk-Controller, einer zweiten Bandbreiten-Verhandlungsnachricht an den dritten Client-Controller, wobei die zweite Bandbreiten-Verhandlungsnachricht die ersten Knoteninformationen des ersten Links, die letzten Knoteninformationen des ersten Links und die zweiten verhandelten Bandbreiteninformationen umfasst.

6. Verfahren gemäß Anspruch 5, das ferner Folgendes umfasst:
Empfangen, durch den Transportnetzwerk-Controller, einer zweiten Bandbreitenverhandlungs-Annahmenachricht von dem dritten Client-Controller, wobei die zweite Bandbreitenverhandlungs-Annahmenachricht eine Nachricht zum Akzeptieren der zweiten Bandbreiten-Verhandlungsnachricht ist;
Empfangen, durch den Transportnetzwerk-Controller, einer zweiten verhandelten Bandbreiten-Freigabenachricht von dem dritten Client-Controller, wobei die zweite verhandelte Bandbreiten-Freigabenachricht eine Nachricht ist, die angibt, dass der dritte Client-Controller die zweite verhandelte Bandbreite freigegeben hat.

7. Verfahren gemäß Anspruch 5, das ferner Folgendes umfasst:
Empfangen, durch den Transportnetzwerk-Controller, einer zweiten Bandbreitenverhandlungs-Ablehnungsnachricht von dem dritten Client-Controller, wobei die zweite Bandbreitenverhandlungs-Ablehnungsnachricht eine Nachricht zum Ablehnen der zweiten Bandbreiten-Verhandlungsnachricht ist.

8. Verfahren gemäß Anspruch 6, das ferner Folgendes umfasst:
Hinzufügen, durch den Transportnetzwerk-Controller, der zweiten verhandelten Bandbreite zu der zuteilbaren Bandbreite des ersten Links, um eine aktualisierte zuteilbare Bandbreite des ersten Links zu erhalten und zu bestimmen, ob die aktualisierte zuteilbare Bandbreite des ersten Links die Bandbreitenanforderung des ersten Links erfüllt, und wenn die aktualisierte zuteilbare Bandbreite des ersten Links die Bandbreitenanforderung des ersten Links erfüllt, Zuteilen, durch den Transportnetzwerk-Controller, einer entsprechenden Bandbreite von der aktualisierten zuteilbaren Bandbreite des ersten Links zu dem ersten Client-Controller gemäß der Bandbreitenanforderung des ersten Links.

9. Transportnetzwerk-Controller (30), der dazu ausgelegt und vorgesehen ist, ein beliebiges der Verfahren gemäß den Ansprüchen 1 - 8 durchzuführen.

## Revendications

1. Procédé d'attribution de ressources de largeur de bande, comprenant les étapes consistant à :
• recevoir, par un dispositif de commande de réseau de transport, un premier message de requête de topologie de réseau d'un premier dispositif de commande client, le premier message de requête de topologie de réseau comprenant une première information de noeud d'une première liaison, une dernière information de noeud de la première liaison et un besoin en largeur de bande de la première liaison (étape 101) ;
• déterminer, par le dispositif de commande de réseau de transport, si une largeur de bande attribuable de la première liaison satisfait le besoin en largeur de bande de la première liaison (étape 102) ;
• lorsqu'il est déterminé que la largeur de bande attribuable de la première liaison ne satisfait pas le besoin en largeur de bande de la première liaison, déterminer, par le dispositif de commande de réseau de transport, s'il existe de la largeur de bande libre dans une largeur de bande attribuée de la première liaison, et si oui, déterminer si une somme de la largeur de bande attribuable de la première liaison et de la largeur de bande libre dans la largeur de bande attribuée de la première liaison satisfait le besoin en largeur de bande de la première liaison, et si oui, sélectionner une première largeur de bande libre dans la largeur de bande attribuée de la première liaison comme une première largeur de bande négociée, la première largeur de bande libre dans la largeur de bande attribuée de la première liaison appartenant à un deuxième dispositif de commande client (étape 103) ; et
• envoyer, par le dispositif de commande de réseau de transport, un message de négociation d'une première largeur de bande au deuxième dispositif de commande client, le message de négociation d'une première largeur de bande comprenant la première information de noeud de la première liaison, la dernière information de noeud de la première liaison et l'information de la première largeur de bande négociée (étape 104).

2. Procédé selon la revendication 1, comprenant en outre les étapes consistant à :
recevoir, par le dispositif de commande de réseau de transport, un message d'acceptation de négociation d'une première largeur de bande du deuxième dispositif de commande client, le message d'acceptation de négociation d'une première largeur de bande étant un message pour accepter le message de négociation d'une première largeur de bande ;
recevoir, par le dispositif de commande de réseau de transport, un message de libération d'une première largeur de bande négociée du deuxième dispositif de commande client, le message de libération d'une première largeur de bande négociée étant un message indiquant que le deuxième dispositif de commande client a libéré la première largeur de bande négociée.

3. Procédé selon la revendication 1, comprenant en outre l'étape consistant à :
recevoir, par le dispositif de commande de réseau de transport, un message de rejet de négociation d'une première largeur de bande du deuxième dispositif de commande client, le message de rejet de négociation d'une première largeur de bande étant un message pour rejeter le message de négociation d'une première largeur de bande.

4. Procédé selon la revendication 2, comprenant en outre l'étape consistant à :
ajouter, par le dispositif de commande de réseau de transport, la première largeur de bande négociée à la largeur de bande attribuable de la première liaison pour obtenir une largeur de bande attribuable de la première liaison mise à jour, et déterminer si la largeur de bande attribuable mise à jour de la première liaison satisfait le besoin en largeur de bande de la première liaison, et si la largeur de bande attribuable mise à jour de la première liaison satisfait le besoin en largeur de bande de la première liaison, attribuer, par le dispositif de commande de réseau de transport, une largeur de bande correspondante provenant de la largeur de bande attribuable mise à jour de la première liaison au premier dispositif de commande client selon le besoin en largeur de bande de la première liaison.

5. Procédé selon la revendication 1, dans lequel, lorsqu'il est déterminé que la somme de la largeur de bande attribuable de la première liaison et de la largeur de bande libre dans la largeur de bande attribuée de la première liaison satisfait le besoin en largeur de bande de la première liaison, le procédé comprend en outre les étapes consistant à :
sélectionner une deuxième largeur de bande libre dans la largeur de bande attribuée de la première liaison comme une deuxième largeur de bande négociée, la deuxième largeur de bande libre dans la largeur de bande attribuée de la première liaison appartenant à un troisième dispositif de commande ; et
envoyer, par le dispositif de commande de réseau de transport, un message de négociation d'une deuxième largeur de bande au troisième dispositif de commande client, le message de négociation d'une deuxième largeur de bande comprenant la première information de noeud de la première liaison, la dernière information de noeud de la première liaison, et l'information de la deuxième largeur de bande négociée.

6. Procédé selon la revendication 5, comprenant en outre les étapes consistant à :
recevoir, par le dispositif de commande de réseau de transport, un message d'acceptation de négociation d'une deuxième largeur de bande du troisième dispositif de commande client, le message d'acceptation de négociation d'une deuxième largeur de bande étant un message pour accepter le message de négociation d'une deuxième largeur de bande ;
recevoir, par le dispositif de commande de réseau de transport, un message de libération d'une deuxième largeur de bande négociée du troisième dispositif de commande client, le message de libération d'une deuxième largeur de bande négociée étant un message indiquant que le troisième dispositif de commande client a libéré la deuxième largeur de bande négociée.

7. Procédé selon la revendication 5, comprenant en outre l'étape consistant à :
recevoir, par le dispositif de commande de réseau de transport, un message de rejet de négociation d'une deuxième largeur de bande du troisième dispositif de commande client, le message de rejet de négociation d'une deuxième largeur de bande étant un message pour rejeter le message de négociation d'une deuxième largeur de bande.

8. Procédé selon la revendication 6, comprenant en outre l'étape consistant à :
ajouter, par le dispositif de commande de réseau de transport, la deuxième largeur de bande négociée à la largeur de bande attribuable de la première liaison pour obtenir une largeur de bande attribuable mise à jour de la première liaison, et déterminer si la largeur de bande attribuable mise à jour de la première liaison satisfait le besoin en largeur de bande de la première liaison, et si la largeur de bande attribuable mise à jour de la première liaison satisfait le besoin en largeur de bande de la première liaison, attribuer, par le dispositif de commande de réseau de transport, une largeur de bande correspondante provenant de la largeur de bande attribuable mise à jour de la première liaison au premier dispositif de commande client selon le besoin en largeur de bande de la première liaison.

9. Dispositif de commande de réseau de transport (30), configuré et prévu pour effectuer l'un des procédés selon l'une quelconque des revendications 1 à 8.
